Europäisches Patentamt

European Patent Office

Office européen des brevets

(19)

(11) Veröffentlichungsnummer **0 158 829**

A1

(12) **EUROPÄISCHE PATENTANMELDUNG**

(21) Anmeldenummer: 85102864.7

(22) Anmeldetag: 13.03.85

(51) Int. Cl.⁴: **G 01 T 1/18**
**G 01 T 7/12**

(30) Priorität: 16.03.84 DE 3409627

(43) Veröffentlichungstag der Anmeldung:
23.10.85 Patentblatt 85/43

(84) Benannte Vertragsstaaten:
DE FR GB IT NL

(71) Anmelder: HELD, Gerhard und HELD, Karl Elektronische
Messgeräte
Gottlieb-Daimler-Strasse 11
D-7519 Gemmingen(DE)

(72) Erfinder: Panzer, Siegfried
Keplerstrasse 34a
D-7530 Pforzheim(DE)

(72) Erfinder: Miller, Ernst
Kronprinzenstrasse 42
D-7530 Pforzheim(DE)

(74) Vertreter: Jeser, Jean-Pierre
Lerchenstrasse 56
D-7100 Heilbronn(DE)

(54) Tragbares Strahlenmessgerät.

(57) Ein elektrisches Tragbares Strahlenmessgerät (10) weist
ein Gehäuse aus zwei Halbscalen (11, 13) auf. In der vorderen
Halbschale (13) ist ein Sichtfenster (15) vorhanden, durch das
hindurch der Zeiger (20) und die Skala (21) eines Drehspulmeßinstrumentes zu sehen sind, das die von einem Strahlungsempfänger empfangene Dosisleistung anzeigt. Die Skala weist drei unterschiedlich farbige Bereiche auf, nämlich
einen grünen für niedrige Strahlungswerte, einen gelben für
mittlere Strahlungswerte und einen roten für hohe Strahlungswerte.

Fig.1

- 1 -

## BESCHREIBUNG

Tragbares Strahlenmeßgerät

### TECHNISCHES GEBIET

Die Erfindung betrifft ein tragbares Strahlenmeßgerät zum Erfassen und Anzeigen von radioaktiver Strahlung, insbesondere von Gammastrahlung.

### STAND DER TECHNIK

Strahlenmeßgeräte für radioaktive Strahlung weisen als Strahlungsempfänger ein Geiger-Müller-Zählrohr oder eine Ionisationskammer auf. Die Signale des elektrisch betriebenen Strahlungsempfängers werden mit einem anzeigenden Meßinstrument optisch dargestellt.

Strahlenmeßgeräte finden vor allem in Labors Verwendung, wo sie zum Durchführen quantitativer Messungen dienen. Derartige Geräte dienen aber auch als Schutzgeräte für Personen, bei denen aufgrund ihres Berufes Gefahr besteht, daß sie radioaktiver Strahlung ausgesetzt sein können. Mit dem Verbreiten von Atomkraftwerken und dem Durchführen atomarer Testexplosionen hat sich diese Gefahr des radioaktiver Strahlung Ausgesetztseins auf weite Bevölkerungskreise verbreitet. Um Schutzmaßnahmen für die gesamte Bevölkerung vorzusehen, wurde z. B. in der Bundesrepublik Deutschland bereits 1965 das Selbstschutzgesetz verabschiedet. Kurz vor seinem Inkrafttreten wurde es aber aus Spargründen wieder aufgehoben. Das Gesetz sah vor, daß unter anderem Firmen mit mehr als 15 Angestellten mit einer bestimmten Anzahl von Kleinstrahlenmeßgeräten ausgestattet sein sollten.

Vor zwanzig Jahren wurde also bereits die Notwendigkeit erkannt, parallel zur Zunahme der radioaktiven Gefährdung für weite Bevölkerungskreise Selbstschutzmaßnahmen für die Bevölkerung zu schaffen. Ein 1962 verkaufter Geigerzähler für diesen Zweck war z. B. der Volksgeigerzähler EGM 2000, der eine analoge Zeigeranzeige und drei über einen Einstellknopf einstellbare Meßbereiche, sowie einen Ohrhöreranschluß aufwies. Ein anderes tragbares Strahlenmeßgerät ist z. B. aus der deutschen Offenlegungsschrift 2,112,514, veröffentlicht 1972, bekannt. Das dort beschriebene Gerät weist einen Tragegriff auf, zu dem eng benachbart Drucktasten zum Umstellen der Meßbereiche und der empfangenen Strahlungsarten angeordnet sind. Die Stärke der gemessenen Strahlung wird über ein analoges Zeigerinstrument auf drei Skalen dargestellt. Zwei der drei Skalen zeigen in ihren Endbereichen eine Schraffierung. Der Zweck dieser Schraffierung ist nicht beschrieben, jedoch dienen derartige markierte Endbereiche i. d. R. dazu, bei einer Batterieprüfung anzuzeigen, ob die Batterie für den Betrieb des Gerätes noch ausreichend aufgeladen ist. Erreicht der Zeiger bei der Batterieprüfung den gekennzeichneten Endbereich nicht, muß die Batterie ausgetauscht werden.

Seit über zwanzig Jahren besteht also in der breiten Bevölkerung ein Bedürfnis nach tragbaren Strahlenmeßgeräten, insbesondere bei Mitgliedern von Bürgerinitiativen in der Gegend von Kernkraftwerksstandorten.

Neben den Geräten mit analoger Meßwertanzeige mit Hilfe des Zeigers eines Drehspulinstrumentes, ist aus der deutschen Auslegeschrift 2,119,521 ein Strahlenmeßgerät mit einer digitalen Anzeige bekannt. Das Gerät verfügt über einen stationären und eine tragbaren Teil. Der tragbare Teil verfügt über eine Zeigeranzeige, während am stationären Teil drei Lampen mit den Farben Grün, Gelb und Rot angebracht sind. Der tragbare Teil ist im Ruhezustand in den stationären Teil eingeschoben, wodurch die Batterien des tragbaren Teiles mit Hilfe eines Ladegerätes im stationären Teil aufgeladen werden, und Meßgas im tragbaren Teil ausgetauscht wird. Bevor eine Bedienperson den tragbaren Teil dem stationären Teil entnimmt, führt sie ihre Hand an das Meßgerät heran, um festzustellen, ob an der Hand Spuren von radioaktivem Material vorhanden sind. Wäre dies der Fall, würde beim Tragen des tragbaren Teiles dauernd die Strahlung von der Hand gemessen werden, was zu Fehlmessungen führen würde. Welche Strahlung von Verunreinigungen an der Hand durch radioaktives Material noch zulässig sind, wird durch die Kontaminationsanzeige durch die drei Lampen am stationären Teil angezeigt. Die drei Lampen am stationären Teil haben also nichts unmittelbar mit der Analoganzeige am tragbaren Teil zu tun. Mit der Analoganzeige wird die Stärke der Strahlung von einem Meßobjekt angezeigt, während die Digitalanzeige mit Hilfe der drei Lämpchen im Ruhezustand des tragbaren Teiles anzeigt, ob die Hand der Bedienperson zu sehr verunreinigt ist, als daß sie das tragbare Teil dem stationären Teil entnehmen und Messungen durchführen sollte.

Den tragbaren Strahlenmeßgeräten ist eine Gebrauchsanweisung beigefügt, die aussagt, bei welchen Strahlungswerten Gefährdung auftritt und bei welchen nicht. In einem Bereich mit niedrigen Strahlungswerten bis etwa 2 mR/h können sich Personen unbedenklich aufhalten. In einem Bereich mit Strahlungswerten bis etwa 30 mR/h sollen sich Personen nur vorübergehend aufhalten. Je höher die Dosisleistung ist, desto kürzer soll der Aufenthalt sein. Einen Bereich mit einer Dosisleistung von über 30 mR/h müssen Personen sofort verlassen. Um festzustellen, welcher Gefahrenzustand vorhanden ist, hat die Bedienperson den Umschalter des Meßgerätes so einzustellen, daß der Zeiger des Meßinstrumentes sich im Anzeigebereich bewegt, die richtige Skala ist abzulesen, und dann ist zu ermitteln, ob der abgelesene Wert in einen Gefahrenbereich fällt oder nicht, und wenn ja, in welchen.

## DARSTELLUNG DER ERFINDUNG

Das erfindungsgemäße tragbare Strahlenmeßgerät weist ein Meßinstrument mit nur einer einzigen Skala auf, die jedoch für mittlere Strahlungswerte ein Symbol für Gefahr, z. B. die Farbe Gelb, und für hohe Strahlungswerte ein Symbol aufweist, z. B. die Farbe Rot, das die Anweisung zum Verlassen des Ortes ausdrückt. Zusätzlich kann die Skala für niedrige Strahlungswerte ein drittes Symbol aufweisen, z. B. die Frabe Grün, das gefahrlosen Zustand anzeigt.

Durch diesen Aufbau ist gewährleistet, daß jedermann auch ohne Gebrauchsanweisung jederzeit erkennen kann, ob die gemessene Strahlung ungefährlich, alarmierend oder sehr gefährlich ist. Bewegt sich die Person, die das Gerät trägt im Gelände, so erkennt sie aufgrund der Analoganzeige, ob sie sich in ein Gebiet höherer Strahlung oder in ein solches schwächerer Strahlung bewegt. Durch den Aufbau des Gerätes ist es jedermann möglich, die Richtung in sicheres Gelände zu finden, d. h. in solches Gelände, innerhalb dem das Meßinstrument Werte im Bereich niedriger Strahlungswerte, angedeutet z. B. durch die Farbe Grün oder ein anderes Symbol, anzeigt. Durch Verwenden einer derartigen Skala erkennt also jede ungeschulte Person schon beim ersten Anwenden, ob die Strahlung ungefährlich ist, ob Vorsicht geboten ist oder ob höchste Gefahr droht, und der strahlende Bereich sofort zu verlassen ist. Es ist keinerlei Umschalten zwischen verschiedenen Meßbereichen, Ablesen genau im richtigen Meßbereich und abschließenden Zuordnen des abgelesenen Wertes mit einer Gefahrentabelle durchzuführen.

Da es darauf ankommt, daß das Gerät möglichst lange messen kann, ist eine vorteilhafte Ausgestaltung so ausgebildet, daß es einen Ein/Aus-Schalter aufweist, der das Gerät nur einschaltet, solange er gedrückt ist. Dadurch ist sichergestellt, daß nur dann Strom verbraucht wird, wenn die Bedienperson tatsächlich messen möchte. Eine andere vorteilhafte Ausgestaltung besteht darin, daß das Gerät eine Solarzelle aufweist. Zweckmäßigerweise ist jedoch zusätzlich zur Solarzelle noch eine Batterie vorhanden, damit das Gerät auch bei sehr schwacher Beleuchtung noch sicher betrieben werden kann.

### KURZE BESCHREIBUNG DER ZEICHNUNGEN

Die Erfindung wird im folgenden an Hand von Figuren näher veranschaulicht. Es zeigen:

Fig. 1    eine perspektivische Ansicht eines Kleinstrahlen-meßgerätes; und

Fig. 2    eine schematische Ansicht der Meßskala des Gerätes von Fig. 1.

### WEGE ZUM AUSFÜHREN DER ERFINDUNG

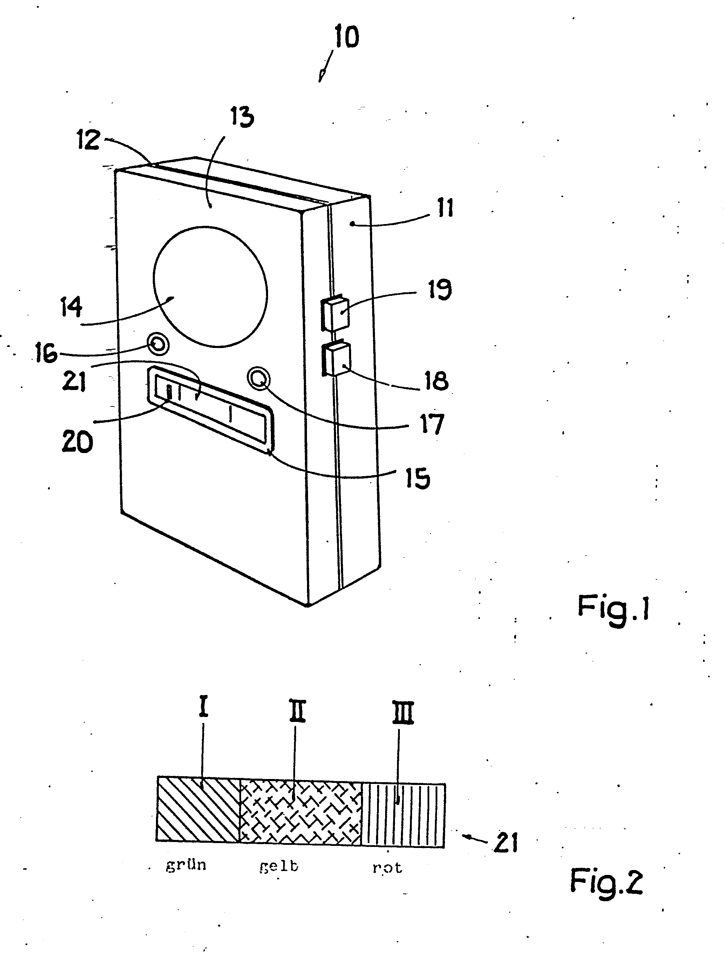

Das tragbare Strahlenmeßgerät 10 gemäß Fig. 1 weist ein Gehäuse aus einer hinteren Kunststoffhalbschale 13 und einer vorderen Kunststoffhalbschale 11 auf, die über eine Klebefuge 12 miteinander verbunden sind.

An der vorderen
Halbschale 13 sind ein Lautsprecher 14, ein Sichtfenster 15,
eine Funktionsleuchte 16 und eine Meßereignisleuchte 17 angebracht. An einer Seitenfläche befinden sich ein Ein/Aus-
Schalter 18 und eine Zuschalttaste 19.

Durch das Sichtfenster 15 hindurch sind der Zeiger 20 und
die Skala 21 eines Meßinstrumentes zu sehen, das im Gehäuse
angeordnet ist.

Oben im Gehäuse befindet sich eine (nicht dargestellte) Batterie und unten im Gehäuse befindet sich ein (ebenfalls
nicht dargestelltes) Geiger-Müller-Zählrohr. Es ist
vom Typ ZP 1320 von der Firma Valvo. Das Zählrohr wird mit
einer Spannung von 450 V versorgt, die durch entsprechendes
Umwandeln der Batteriespannung gewonnen wird.

Wird der Ein/Aus-Schalter 18 betätigt, so wird die Batterie
mit dem Stromkreis zum Betreiben des Gerätes verbunden, wodurch das Zählrohr mit der Hochspannung versorgt wird, und
die Funktionsleuchte 16, eine Glimmleuchte, dauernd aufleuchtet. Empfängt dann das Zählrohr Strahlung, so gibt es ein
elektrisches Signal ab, das auf das Meßinstrument und auf
die Meßereignisleuchte 17 gegeben wird. Die Meßereignisleuchte blinkt dadurch kurz auf. Mißt das Gerät nur die kosmische Höhenstrahlung, so werden etwa 10 - 12 Impulse pro
Minute an der Meßereignisleuchte 17 angezeigt. Der Zeiger 20
des Meßinstrumentes zeigt bei so wenigen Pulsen noch keinen
Ausschlag. Der Zeiger gibt erst bei etwa 600 Impulsen pro
Minute einen Ausschlag, was etwa 1 mR/h entspricht.

Die Skala 21 des Meßinstrumentes ist in drei Bereiche I, II
und III unterteilt, wie dies in Fig. 2 vergrößert dargestellt
ist. Beim tatsächlichen Ausführungsbeispiel ist Bereich I grün, Bereich II orange und Bereich III rot. Die Grenze zwischen den Bereichen I und II erreicht der Zeiger 20 bei etwa 2 mR/h. Die Grenze zwischen den Bereich II und III erreicht er bei etwa 30 mR/h. Das angegebene Zählrohr ist ein Geiger-Müller-Zählrohr, das auf Gammastrahlung ab etwa 40 kV anspricht. Ein solches Zählrohr mißt nur die Anzahl der Ereignisse, ohne nach der Energie des einzelnen Ereignisses zu unterscheiden. Es wird davon ausgegangen, daß die Ereignisse im Mittel eine mittlere Energie aufweisen. Der Zeigerausschlag entspricht also letztendlich einer bestimmten Anzahl von Impulsen pro Minute und nicht genau einer Dosisleistung. Dies ist jedoch unerheblich, da das Gerät ohnehin nicht zum genauen Messen dient, sondern dazu, Gefahrenzustände anzuzeigen. Der Bereich I entspricht niedrigen Strahlungswerten, bei denen sich Personen noch unbedenklich am Ort der Strahlung aufhalten können. Bereich II entspricht mittleren Strahlungswerten. Personen sollten sich im Gebiet solcher Strahlung nur vorübergehend aufhalten, und zwar umso kürzer, je näher der Zeiger 20 zur Grenze zum Bereich III steht. Bereich III entspricht hohen Strahlungswerten und damit einem Aufenthaltsort, der sofort verlassen werden muß.

Solange die Zuschalttaste 19 nicht betätigt ist, sind keine Knackgeräusche im Lautsprecher 14 zu hören. Diese ertönen erst dann, wenn gleichzeitig mit dem Ein/Aus-Schalter 18 die Zuschalttaste 19 betätigt wird. Die beiden Tasten sind so nahe beieinander angeordnet, daß sie mit demselben Finger betätigt werden können.

Als Batterie wird im Ausführungsbeispiel eine Lithiumbatterie mit 3,4 Volt verwendet. Eine solche Batterie hat eine außerordentlich hohe Lebensdauer. Das tragbare Strahlenmeßgerät 10 gemäß dem Ausführungsbeispiel kann bei täglich 5 Minuten Meßzeit bei normaler Dosis für sechs Jahre betrieben werden. Ohne Messungen ist die Lebensdauer erheblich höher. Eine Gefahr des Auslaufens der Batterie besteht nicht. Dadurch ist gewährleistet, daß das Gerät nicht auf Grund von Batteriedefekten unbenutzbar wird.

Die Anschlüsse der Batterie sind mit den Zuleitungsdrähten verlötet, die die Batterie mit dem Stromkreis des Gerätes verbinden. Dadurch läßt sich die Batterie zwar nicht leicht auswechseln, wie dies bei bisherigen tragbaren Strahlenmeßgeräten der Fall war, aber es ist besonders große Funktionssicherheit gewährleistet, worauf es bei einem solchen Gerät mehr ankommt als auf einfache Austauschbarkeit von Teilen.

Das Gehäuse des Gerätes 10 kann statt aus Kunststoff auch aus Metall hergestellt sein. Die beiden Gehäuseteile sollen jeweils vollkommen wasser- und staubdicht miteinander verbunden sein. Dann sind die Tasten 18 und 19 durch eine Gummihülle zu überdecken. Ein solcher Aufbau ist insbesondere dann von Vorteil, wenn eine Batterie sehr hoher Lebensdauer verwendet wird, so daß davon ausgegangen werden kann, daß das Gerät über Jahrzehnte betriebsbereit bleibt, wenn es kaum benutzt wird.

Das beim Gerät 10 gemäß Ausführungsbeispiel verwendete Meßinstrument ist ein Drehspulmeßinstrument mit beweglichem Zeiger 20 und feststehender Skala 21. Stattdessen kann auch der Zeiger feststehen und sich die Skala drehen. Statt einer analogen Anzeige mit einem Zeiger kann das Gerät auch mit einer digitalen Anzeige mit Leuchtdioden ausgebildet sein. Minimal genügen zwei Leuchtdioden, nämlich eine, z. B. eine gelbe für den Bereich mittlerer Strahlungswerte, und eine zweite, z. B. rote für den Bereich hoher Strahlungswerte. Weder bei der Analog- noch bei der Digitalanzeige ist es nämlich erforderlich, den ungefährlichen Bereich niedriger Strahlungswerte anzuzeigen. Jedoch ist es so, daß es für die Bedienperson beruhigender ist, wenn sie erkennen kann,

daß zwar Strahlung vorhanden ist, aber in einem ungefährlichen Bereich. Dann ist sichergestellt, daß das Gerät arbeitet, worüber nur beim Anzeigen mittlerer und hoher Strahlungswerte Unsicherheit bestehen könnte. Zum Verdeutlichen des Strahlungszustandes ist es auch von Vorteil, statt nur zwei oder drei Dioden für zwei oder drei unterschiedliche Meßbereiche mehrere Dioden anzubringen, z. B. drei grüne, 10 gelbe und zwei rote. Wie bei diesem Beispiel, so ist es generell günstig, für den mittleren Bereich eine besonders breite Anzeige, sei sie digital oder analog, anzubringen. Es ist dies nämlich der Bereich, in dem mit unterschiedlicher Eile gehandelt werden muß. Ist nämlich der mittlere Bereich erste gerade erreicht, so soll der Ort der Strahlung zwar verlassen werden, jedoch ist noch nicht höchste Eile geboten. Liegt dagegen Strahlung vor, die sich zwar noch im mittleren Bereich befindet, aber sehr dicht am Bereich höchster Gefahr, so ist praktisch schon zu handeln wie im Bereich höchster Gefahr, es ist nämlich der Ort der Strahlung so schnell wie möglich zu verlassen.

Statt durch Farben können die drei Bereiche auch durch andere Sinnbilder in bezug auf die Gefährlichkeit der Strahlung gekennzeichnet sein. So kann im Bereich I z. B. eine stehende Person, im Bereich II eine gehende Person und im Bereich III eine laufende Person dargestellt sein.

Damit das Gerät möglichst wenig Strom verbraucht, also möglichst lange gemessen werden kann, ist der Ein/Aus-Schalter 18 vorzugsweise so ausgebildet, daß er dauernd gedrückt werden muß, während gemessen werden soll. Damit ist sichergestellt, daß das Gerät nur so lange eingeschaltet ist, wie tatsächlich gemessen werden. Eine lange Lebensdauer der Batterie im tragbaren Strahlenmeßgerät ergibt sich auch dann, wenn das Gerät zusätzlich über eine Solarzelle verfügt, die das Gerät am Tag bei Spannung versorgt. Dann wird die Batterie nur bei Messungen belastet, die bei Dunkelheit ausgeführt werden. Wenn ausreichend viele Solarzellen verwendet werden, ist es auch möglich, das Gerät ohne Batterie bei einem Umlichtpegel zu betreiben, der das Ablesen noch erlaubt.

0158829

ANSPRÜCHE

1. Tragbares Strahlenmeßgerät mit

- einer Spannungsquelle,

- einem anzeigenden Meßinstrument zum optischen Anzeigen der Stärke der vom Strahlungsempfänger empfangenen Strahlung und

- einem Strahlungsempfänger zum Erfassen radioaktiver Strahlung,

d a d u r c h   g e k e n n z e i c h n e t , daß das Meßinstrument eine einzige Skala (21) aufweist, die für

-- mittlere Strahlungswerte, das heißt bei solcher Strahlung, in der sich Personen nur vorübergehend aufhalten können, ein Symbol für Gefahr und für

-- hohe Strahlungswerte, das heißt bei solcher Strahlung, bei der Personen den Ort der Strahlung sofort verlassen müssen, ein Symbol aufweist, das die Anweisung zum Verlassen des Ortes ausdrückt.

2. Gerät nach Anspruch 1,
d a d u r c h   g e k e n n z e i c h n e t ,   daß die Skala (21) für niedrige Strahlungswerte ein drittes Symbol aufweist, das gefahrlosen Zustand anzeigt.

3. Gerät nach Anspruch 1,
d a d u r c h   g e k e n n z e i c h n e t ,   daß die Symbole für den Gefahrenzustand unterschiedliche Farben sind.

4. Gerät nach Anspruch 3,
d a d u r c h   g e k e n n z e i c h n e t ,   daß die Farben für die Bereiche niedriger, mittlerer und hoher Spannungswerte die Farben Grün, Gelb und Rot sind.

0158829

5.  Gerät nach Anspruch 1,
    d a d u r c h   g e k e n n z e i c h n e t , daß
    das Meßinstrument ein Drehspulmeßinstrument mit feststehender Skala (21) und beweglichem Zeiger (20) ist.

6.  Gerät nach Anspruch 1,
    d a d u r c h   g e k e n n z e i c h n e t , daß
    die Skala (21) durch aufeinanderfolgende Leuchtdioden
    gebildet ist.

7.  Gerät nach Anspruch 1,
    g e k e n n z e i c h n e t   d u r c h
    eine Leuchtanzeige, die mit jedem registrierten Strahlungsereignis aufleuchtet.

8.  Gerät nach Anspruch 1,
    g e k e n n z e i c h n e t   d u r c h
    einen Ein/Aus-Schalter (18), der das Gerät nur einschaltet, solange er gedrückt wird.

9.  Gerät nach Anspruch 1,
    d a d u r c h   g e k e n n z e i c h n e t , daß
    die Spannungsquelle eine Solarzelle ist.

Fig.1

grün        gelb        rot

Fig.2

Europäisches
Patentamt

**EUROPÄISCHER RECHERCHENBERICHT**

0158829
~Nummer der Anmeldung

EP 85 10 2864

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X,Y | CH-A- 516 805 (PRETRE S.B.) * Spalte 2, Zeile 9 - Spalte 4, Zeile 17; Figuren * | 1,2 | G 01 T 1/18 G 01 T 7/12 |
| A | | 7,8 | |
| | --- | | |
| Y | IEEE TRANSACTIONS ON NUCLEAR SCIENCE, Band NS-23, Nr. 4, August 1976, Seiten 1401-1406, New York, US; G.R. STEVENSON: "The application of computers in health physics" * Seite 1402, Absätze 3-5; Figuren 6,8 * | 1,2 | |
| A | IDEM | 3,4,6, 7 | |
| | | | RECHERCHIERTE SACHGEBIETE (Int. Cl.4) |
| | --- | | |
| A | US-A-2 963 588 (WILSON) * Spalte 2, Zeilen 13-56; Spalte 4, Zeilen 1-50; Figuren 1,2 * | 1,2,5 | G 01 T |
| | ----- | | |

*Der vorliegende Recherchenbericht wurde für alle Patentansprüche erstellt.*

| Recherchenort DEN HAAG | Abschlußdatum der Recherche 03-07-1985 | Prüfer DATTA S. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82